Europäisches Patentamt

European Patent Office

Office européen des brevets

(11) Publication number: **0 224 356**
A2

# (12) EUROPEAN PATENT APPLICATION

(21) Application number: 86308746.6

(22) Date of filing: 11.11.86

(51) Int. Cl.⁴: **G 01 N 1/10**

(30) Priority: 14.11.85 GB 8528155

(43) Date of publication of application:
03.06.87 Bulletin 87/23

(84) Designated Contracting States:
DE FR GB

(71) Applicant: IMPERIAL CHEMICAL INDUSTRIES PLC
Imperial Chemical House Millbank
London SW1P 3JF(GB)

(72) Inventor: Clarke, John Robin Paul
13 Old Wool Lane
Cheadle Cheshire SK8 5JB(GB)

(74) Representative: Oldroyd, Alan et al,
Imperial Chemical Industries PLC Legal Department:
Patents PO Box 6 Bessemer Road
Welwyn Garden City Herts, AL7 1HD(GB)

(54) Sampling device.

(57) A sampling device for particulate solids or liquids comprises a hollow, preferably frustro-conical, sample holder and means to rotate the sample holder at high speed whereby material introduced into the interior of the sample holder is flung against the walls of the sample holder and is held against the walls until rotation of the sample holder is ceased or the speed of rotation is reduced sufficiently.

EP 0 224 356 A2

## SAMPLING DEVICE

This invention relates to device for taking a sample of a particulate solid material, a slurry/paste or a liquid and transferring the sample to a measuring device such as a weighing balance or a vessel such as a beaker or flask.

One of the commonest functions in _inter alia_ a research or analytical laboratory is the preparation of a solution of known concentration from a particulate solid or slurry/paste or liquid material. This involves taking a sample of the particulate solid or slurry/paste or liquid material of approximately known weight or volume, weighing the sample and dissolving it in a known amount of a solvent. It is desirable that this routine operation or at least a part of it should be automated but at present the use of a robot, for example, is hindered by the lack of a simple sampling device suitable for adoption or adaptation for employment by a robot. Spoons, ladles and the like which require to be inverted or tilted in complex ways to charge or discharge the sample are not generally suitable for employment by a simple robot arm which may be capable of only simple horizontal and vertical movements. The present invention concerns a sampling device which is suitable for employment by a simple robot and which at the same time is a convenient device for use by a person.

According to the present invention there is provided a sampling device comprising a hollow sample holder and means for rotating the sample holder at high speed whereby material introduced into the interior of the sample holder is flung against the walls of the sample holder and is held against the walls until rotation of the sample holder is ceased or the speed of rotation is reduced.

The simplest form of the sample holder is a hollow cylinder such as a tube open at one (in use, the lower) end and essentially closed at the other (in use, the upper) end. In this embodiment, the cylinder or tube preferably has an internal lip at its open (lower) end to enable material to build up on its internal walls to an appreciable thickness. To facilitate emptying of the sample holder by gravity, the lip may be sloped so as to avoid sharp corners from which material may be difficult to displace.

Instead of a tubular holder with an internal lip, a preferred holder has internal walls which taper outwardly from the open (lower) end so that the interior of the holder is of (inverted) frustro-conical shape. In order that material falls readily out of the holder when it ceases rotation, the angle of slope of the internal walls preferably is no greater than 15° to the axis of rotation of the holder. If desired, the internal walls of the holder may be shaped at their junction with the closure at the closed end to avoid a sharp angle from which material is difficult to dislodge.

The walls of the sample holder may be of uniform thickness so that the whole of the holder is of (inverted) frustro-conical shape. In this embodiment, the (lower) edge of the walls is sloped away from the centre of the holder to provide a sharp leading edge facilitating entry of the holder into material to be sampled. The angle of slope of the leading edge of the holder is not critical but we have found that an angle of about 30° is satisfactory.

In taking a sample of a solid particulate material we have found little tendency for the solid particules to climb up the exterior walls of the sample holder and be flung off from its closed (upper) end. However, when sampling a liquid there is a tendency for the liquid to climb up the outer wall and be flung off. We therefore prefer that the sample holder, at least when liquid is to be sampled, should have an outwardly extending lip or rim at the upper end of the walls to deflect liquid back into the bulk liquid. If desired the lip or rim may be curved or have a downward face to deflect liquid downwards towards the bulk liquid. The outer wall of the holder may have a series of lips or rims on its surface.

Any means may be employed for imparting rapid rotation to the sample holder but a particularly convenient means is an electric motor such as is commonly provided in an electric drill. In this embodiment of the invention the sample holder may be provided with an upstanding shaft or stem such that it can be gripped in the chuck of an electric drill.

In the case where the sampling device is fitted to a robot arm, the electric drill or other motor may be fixed in position on the arm. However, a portable, hand-held electric drill may be used where the sampling device is used by a person.

In using the sampling device, the sample holder is caused to rotate rapidly and is pushed (usually lowered vertically) into the bulk material to be sampled so that a portion of the material enters the interior of the holder. This action imparts motion to the material and it is flung outwardly against the

internal wall of the holder and is held against the wall until the speed of rotation of the holder falls sufficiently to permit the material to fall out of the holder under the influence of gravity. In order to impart motion to the material inside the sample holder, the latter may be provided with internal flutes so that it acts like a paddle stirrer for the material. It may often be advantageous to raise and lower the sample holder in the bulk material a few times to introduce a sufficient amount of the material into the interior of the sample holder.

It is not necessary that the depth of the material to be sampled be equal to or greater than the length of the sample holder and indeed the material need not have any appreciable depth. The sampling device can be used to collect a sample from a thin layer of material, for example a powder layer of single-particle thickness. Also, the device does not discriminate between particles of different sizes in mixtures and collects a representative sample. Moreover, the device need not be held vertically during sampling but can be used at any convenient angle. The device when containing a sample and spinning can be moved in any direction and will discharge the sample at any convenient angle.

When a sufficient amount of the material is held within the sample holder, the latter whilst still rotating at high speed is raised out of the bulk material and is moved to a position where it will discharge by gravity into a suitable receptacle such as a beaker or flask, which may be located for example on a weighing balance so that the sample can be weighed.

Rotation of the sample holder is then ceased and the material within it, providing it is sufficiently free-flowing, discharges by gravity.

Discharge of the material may if desired be assisted by a variety of techniques. For example the direction of rotation of the sample holder may be reversed suddenly to impart a jolt sufficient to dislodge the material from the wall of the holder or the holder may be caused to vibrate to shake out the material, for example by holding the sample holder in contact with a vibrating member such as a rod.

Dry powders and liquids are usually fairly readily discharged from the sample holder but moist powders, slurries and pastes may be difficult to discharge. In this case scrapers and/or washing may be provided to discharge the material.

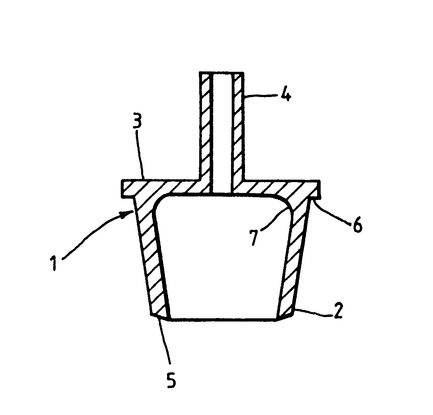

The invention will now be illustrated with reference to the accompanying drawing which shows a sectional elevation of a sample holder suitable for fitting in the chuck of an electric drill. The sample holder, 1, is turned in one piece from a block of metal or plastic and is open at one end 2 and essentially closed at the other end 3. A shank or stem 4 is provided for attaching the holder to the chuck of an electric drill (not shown). The sample holder is of inverted frustro-conical shape and its inner wall tapers upwardly at an angle of 15˘ to the axis of the holder. The leading (lower) edge 5 of the holder tapers outwardly at an angle of 30˘ to the horizontal. A lip 6 extends around the exterior of the holder at its closed (upper) end. The interior surface of the holder is curved at 7 to avoid a sharp angle or "corner" and to assist complete discharge of material from the holder.

The shank or stem 4 is hollow to provide a vent for air whilst filling the sample holder. This is especially useful when filling the holder with a liquid, slurry or paste.

It will readily be appreciated that the sample holder may be made from separate parts rather than being one-piece and that other shapes and configurations of the holder are possible without departing from the substance of the invention.

The sampling device of the invention is especially suited for taking small samples, for example up to 2 or 3 grams, in which case typical dimensions for the sample holder are about 5 to 15 mm internal diameter (at the open or lower end) and 10 to 20 mm length. As a guide only, a sample holder of internal diameter (open end) 10 mm and length 12 mm will be capable of taking samples of solids of up to about 2 grams weight, depending of course upon the density of the material. Sample holders appreciably larger than are described above may be employed in some instances, depending for example upon the physical properties of the material to be sampled and the speed of rotation of which the sample holder is capable.

The invention will now be illustrated by the following examples in which a one-piece, brass sample holder as shown in the drawing fitted in the chuck of a portable, 9v battery-operated electric drill rotatable at 9,000 rpm was used to take samples of particulate solid materials.

Example 1

The sample holder was of length 12 mm (internally) and diameter 10 mm (open end). The wall of the holder tapered outwardly at an angle of 15° and

the leading (lower) edge of the holder was sloped at 30° to the horizontal.

The electric drill was switched on and the rotating sample holder was lowered by hand into sand contained in a beaker until the holder was immersed to the level of the outer rim. The holder was raised and lowered in the sand a few times to "fill" the holder and the device was then raised and transferred to place the sample holder in a beaker located on a weighing balance. There was no loss of sand from the holder during transfer. The electric drill was switched off and the sand fell into the beaker under the influence of gravity. The sample of sand was weighed.

The above operations were repeated nine times. The weights of the ten samples of sand were:-

| Sample No | Weight (g) |
|-----------|------------|
| 1 | 1.5551 |
| 2 | 1.6670 |
| 2 | 1.6118 |
| 4 | 1.6885 |
| 5 | 1.7307 |
| 6 | 1.6288 |
| 7 | 1.5593 |
| 8 | 1.6625 |
| 9 | 1.6130 |
| 10 | 1.6513 |

Example 2

The sampling device described in Example 1 was used to take samples of a fine, slightly damp powder

comprising cetyl trimethyl tetraammonium bromide ("Cetavlon"). The weights of the ten samples were as follows:-

| Sample No | Weight (g) |
|-----------|------------|
| 1 | 0.2890 |
| 2 | 0.3096 |
| 3 | 0.2198 |
| 4 | 0.3486 |
| 5 | 0.4416 |
| 6 | 0.3786 |
| 7 | 0.4106 |
| 8 | 0.4320 |
| 9 | 0.3855 |
| 10 | 0.4721 |

CLAIMS

1.      A sampling device comprising a hollow sample holder and means for rotating the sample holder at high speed whereby material introduced into the interior of the sample holder is flung against the walls of the sample holder and is held against the walls until rotation of the sample holder is ceased or the speed of rotation is reduced.

2.      A sampling device as claimed in Claim 1 wherein one end of the sample holder is essentially closed and the other end is open.

3.      A sampling device as claimed in Claim 1 or Claim 2 in the form of a cylindrical tube having an open end and having an internal lip at the open end.

4.      A sampling device as claimed in Claim 1 or Claim 2 in which the interior of the sample holder is frusto-conical in shape.

5.      A sampling device as claimed in Claim 4 wherein the interior walls of the sample holder slope at an angle of up to 15° to the axis of rotation of the sample holder.

6.      A sampling device as claimed in any one of the preceding claims wherein the sample holder has a closed end and wherein the internal walls of the sample holder are shaped at their junction with the end closure to avoid a sharp angle.

7.      A sampling device as claimed in any one of the preceding claims which is a part of a robot.

8.      A method of sampling a particulate or liquid material which comprises rotating the sample holder of a sampling device as claimed in any one of the

preceding claims, introducing a sample of the material into the interior of the rotating sample holder, transferring the sample to a desired location whilst rotating the sample holder and ceasing or reducing rotation of the sample holder to permit the sample to fall from the sample holder.

9.    A method as claimed in claim 8 wherein the material is introduced into the interior of the sample holder by inserting the rotating sample holder into a layer or bulk of the material.

10.    A method as claimed in claim 9 wherein the sample holder is raised and lowered a few times within the bulk material to introduce a sufficient amount of the material into the interior of the sample holder.

///